# EUROPÄISCHE PATENTANMELDUNG

(11) **EP 4 624 768 A1**
(43) Veröffentlichungstag der Anmeldung: **01.10.2025**
(21) Anmeldenummer: 24159788.9
(22) Anmeldetag: 25.03.2024
(51) Int. Cl.: F16B 7/04, E06B 3/964, E06B 3/968, F16B 21/08

(54) **VERBINDUNGSELEMENT**

(71) Anmelder: SIGN-WARE GmbH & Co. KG, 59846 Sundern (DE)
(72) Erfinder: Vollmer, Gerd, 59846 Sundern (DE); Schmoll, Matthias, 59846 Sundern (DE)
(74) Vertreter: Patentanwälte Dörner & Kötter PartG mbB

(57) **Zusammenfassung**

Die Erfindung betrifft ein Verbindungselement zur Verbindung eines ersten, gekammerten Rahmenprofils (3) mit einem zweiten, eine C-Führung (6) aufweisenden Rahmenprofil (4), umfassend ein quaderförmiges Schlittenstück (11), das Mittel zur Fixierung in der Kammer (51) des gekammerten Rahmenprofils (3) aufweist und das an einer Seite ein Hammerkopfstück (12) zum Eindrehen in die C-Führung (6) des zweiten Rahmenprofils (4) aufweist. Die Erfindung betrifft weiterhin ein Verfahren zur Befestigung eines ersten, gekammerten Rahmenprofils (3) mit einem zweiten, eine C-Führung (6) aufweisenden Rahmenprofil (4).

## Beschreibung

Die Erfindung betrifft ein Verbindungselement zur Verbindung eines ersten, gekammerten Rahmenprofiles mit einem zweiten, eine C-Führung aufweisenden Rahmenprofil nach dem Patentanspruch 1. Die Erfindung betrifft weiterhin ein Verfahren zur Befestigung eines ersten, gekammerten Rahmenprofils zwischen zwei gegenüberliegend angeordneten zweiten, jeweils eine C-Führung aufweisenden Rahmenprofilen eines Rahmens nach dem Patentanspruch 12.

Aus gekammerten Rahmenprofilen werden Rahmenkonstruktionen zum Aufspannen von bedruckten Textilien, Folien oder dergleichen erstellt. Anwendung finden solche Rahmenkonstruktionen beispielsweise im Messebau oder auch zur Ausbildung mobiler Trenn- oder Präsentationswände. Dabei erfolgt die Verbindung der Rahmenprofile, die zur Ausbildung einer an ihren zueinander weisenden Stirnseiten auf Gehrung geschnitten sind, durch ein Verbindungsmittel, das üblicherweise ein als Winkelstück ausgeführter Eckverbinder mit zwei Schenkeln ist, wobei jeder Schenkel in eine Verbindungskammer eines Rahmenprofiles eingreift und darin beispielsweise mittels Madenschrauben verspannt wird. Bei der Verbindungskammer handelt es sich regelmäßig um eine in Längsrichtung des Rahmenprofils verlaufende, hinterschnittene Nut. Genutzt wird diese Nut auch zum Anbringen von Gegenständen, die mit Hilfe von in dieser Nut verspannten Kulissensteinen gehalten sind.

Eine weitere bekannte Lösung zur Verbindung der Rahmenprofile besteht in der Anordnung von Eckstücken, die zwischen die beiden an der Profileckausbildung beteiligten Rahmenprofile eingesetzt werden. Bei diesen Eckstücken handelt es sich typischerweise um Eckprofilteile, die stirnseitig an die beiden an der Profileckausbildung beteiligten Rahmenprofile mit Hilfe von zwei geraden Profilverbindern angeschlossen sind. Diese Profilverbinder greifen in jeweils eine Verbindungskammer der angeschlossenen Rahmenprofile bzw. Rahmenprofilabschnitte ein und werden darin mittels Schrauben festgesetzt.

Zur Verbindung von zwei hintereinander in Flucht angeordneten Rahmenprofilen kommt ebenfalls ein Zwischenstück zum Einsatz, das entsprechend über gerade Profilverbinder, die jeweils in eine Verbindungskammer der angeschlossenen Rahmenprofile eingreifen und dort mittels Schrauben festgesetzt werden, angeschlossen wird.

Diese bekannten Verbindungselemente sind aufwändig mittels vorzuhaltender Werkzeuge zu montieren. Durch Überdrehen der Befestigungsschrauben kann es hierbei zu Beschädigungen an dem Rahmenprofil kommen.

Vor diesem Hintergrund wird in der DE202022100969 U1 ein Verbindungselement zur werkzeuglosen Verbindung von zwei gekammerten Rahmenprofilen zur Herstellung eines Rahmens vorgeschlagen, das einfach und ohne das Erfordernis von Werkzeugen montierbar ist und bei denen Beschädigungen der Rahmenprofile vermieden sind. Das Verbindungselement weist zwei miteinander verbundene Schenkel zum Einschieben in jeweils eine Verbindungskammer der zu verbindenden Rahmenprofile auf, welche jeweils an zwei gegenüberliegenden Seitenwänden mit elastischen Flügeln versehen sind, die in die dem freien Ende des Schenkels entgegengesetzte Richtung sich erstreckend winklig an diesen angestellt sind.

Diese Verbindungselemente haben sich durch die nunmehr realisierbare einfache, werkzeugfreie Montage von Rahmenprofilen in der Praxis bewährt. Umständlich erweist sich jedoch nach wie vor die Montage eines zwischen zwei Rahmenprofilen eines Rahmens zu dessen Unterteilung einzubringenden Rahmenprofils.

Hier setzt die vorliegende Erfindung an. Der Erfindung liegt die Aufgabe zu Grunde, ein Verbindungselement sowie eine Profilverbindung bereitzustellen, das eine einfache und möglichst werkzeugfreie Montage eines ersten Rahmenprofils zwischen zwei zweiten Rahmenprofilen eines Rahmens ermöglicht. Gemäß der Erfindung wird diese Aufgabe durch ein Verbindungselement mit den Merkmalen des Patentanspruchs 1 gelöst.

Mit der Erfindung ist ein Verbindungselement bereitgestellt, das eine einfache und weitgehend werkzeugfreie Montage eines ersten Rahmenprofils zwischen zwei zweiten Rahmenprofilen eines Rahmens ermöglicht. Durch das quaderförmige Schlittenstück, das Mittel zur Fixierung in der Kammer des gekammerten Rahmenprofils aufweist ist eine form- und kraftschlüssige Verbindung des Verbindungselements mit dem ersten, gekammerten Rahmenprofil ermöglicht, sodass das an einer Seite des Schlittenstücks angeordnete Hammerkopfstück endseitig des gekammerten Rahmenprofils angeordnet ist. Das Hammerkopfstück ist in die C-Führung des zweiten Rahmenprofils eindrehbar, wodurch einfach und werkzeuglos eine form- und kraftschlüssige Verbindung mit dem zweiten Rahmenprofil erzielbar ist. Durch die quaderförmige Ausbildung des Schlittenstücks ist eine spielfreie Führung des Schlittenstücks in dem Rahmenprofil erzielt. Hierzu ist es auch ausreichend, dass das Schlittenstück lediglich bereichsweise quaderförmig ausgestaltet ist. In diesem Sinne ist die quaderförmige Gestaltung des Schlittenstücks auszulegen.

In Weiterbildung der Erfindung umfassen die Mittel zur Fixierung des Schlittenstücks eine Schraube, die das Schlittenstück durchdringend in dieses eingeschraubt ist. Hierdurch ist eine Verklemmung des Schlittenstücks in der Kammer ermöglicht. Alternativ können an dem Schlittenstück auch elastische und/oder federnde Spannelemente angeordnet sein, die durch Einbringen des Schlittenstücks in die Kammer komprimierbar sind, wodurch Rückstellkräfte erzielbar sind, welche die Verklemmung bewirken.

In Ausgestaltung der Erfindung ist das Verbindungselement Bestandteil einer Profilverbindung, umfassend ein erstes, gekammertes Rahmenprofil und ein zweites, eine C-Führung aufweisendes Rahmenprofil, wobei in die Kammer des ersten Rahmenprofils das Schlittenstück des Verbindungselements eingebracht und fixiert ist, wobei das Hammerkopfstück in die C-Führung des zweiten Rahmenprofils eingedreht ist, sodass der Hammerkopf die den Längsschlitze der C-Führung begrenzenden Stege hintergreift. Hierdurch ist die Montage der Profilverbindung vereinfacht.

In weiterer Ausgestaltung der Erfindung weist das Schlittenstück eine dieses durchdringende Schraube auf, wobei das gekammerte Rahmenprofil mit einer seitlichen Öffnung versehen ist, durch welche die Schraube festziehbar ist. Hierdurch ist eine einfache Fixierung des Schlittenstücks in der Kammer ermöglicht.

In einer weiteren Ausgestaltung ist das erste, gekammerte Rahmenprofil an wenigstens einem Ende mit einer seitlichen Öffnung versehen und das Schlittenstück weist ein federnd an dem Schlittenelement angeordnetes Rastelement auf, das durch die Öffnung hindurchragt, gegen die das Rastelement vorgespannt ist. Hierdurch ist eine werkzeuglose Verrastung des Schlittenelements mit dem ersten Rahmenprofil ermöglicht. Bevorzugt ist das Rastelement über einen federnden Steg mit dem Schlittenstück verbunden.

In Weiterbildung der Erfindung weist das erste, gekammerte Rahmenprofil an wenigstens einer Längsseite, bevorzugt an beiden Längsseiten eine C-Führung auf, in die jeweils ein Schiebeelement eingebracht ist, das mit einem Endabschnitt in die C-Führung des zweiten Rahmenprofils einschiebbar ist. Hierdurch ist ein unerwünschtes Losdrehen des ersten Rahmenprofils verhindert.

In Ausgestaltung der Erfindung weist das wenigstens eine Schiebeelement einen im Wesentlichen rechtförmigen Querschnitt auf, an dessen Längsseiten wenigstens ein Federelement angeordnet ist. Hierdurch ist eine spielfreie Führung des Schiebeelements in der C-Führung erzielt. Bevorzugt ist das wenigstens eine Federelement durch wenigstens einen elastischen, nach außen ausgestellten Flügel gebildet.

In weiterer Ausgestaltung der Erfindung weist das wenigstens eine Schiebeelement an seiner dem Längsschlitz der dieses aufnehmenden C-Führung zugewandten Deckseite wenigstens eine vorzugsweise elastisch ausgebildete Querrippe auf. Hierdurch ist die spielfreie Führung weiter verbessert. Darüber hinaus ist eine Schiebebetätigung des Schiebeelements in der C-Führung durch den Längsschlitz hindurch erleichtert. Bevorzugt sind mehrere vorzugsweise parallel zueinander angeordnete Rippen vorhanden.

In Weiterbildung der Erfindung ist das zweite Rahmenprofil identisch zu dem ersten Rahmenprofil ausgebildet. Hierdurch ist eine kostengünstige Herstellung eines Rahmens unterstützt. Zudem ist die Lagerhaltung vereinfacht.

Der vorliegenden Erfindung liegt weiterhin die Aufgabe zu Grunde, ein Verfahren bereitzustellen, das eine einfache und möglichst werkzeugfreie Montage eines ersten Rahmenprofils zwischen zwei zweiten Rahmenprofilen eines Rahmens ermöglicht. Gemäß der Erfindung wird diese Aufgabe durch ein Verfahren mit den Merkmalen den Patentanspruchs 12 gelöst.

Hierbei wird zunächst in die Kammer des ersten Rahmenprofils an seinen beiden Endseiten jeweils ein Verbindungselement derart eingebracht und fixiert, dass die Hammerköpfe der beiden Verbindungselemente gleich ausgerichtet sind. Nachfolgend wird das erste Rahmenprofil derart zwischen den beiden zweiten Rahmenprofilen eingeschwenkt, dass die gegenüberliegend angeordneten Hammerköpfe in die C-Führungen der zweiten gegenüberliegenden Rahmenprofile eingreifen. Anschließend wird das erste Rahmenprofil mit den endseitig an diesem angeordneten Hammerköpfen um seine Längsachse rotiert, bis die Hammerköpfe hinter den beiden den Längsschlitz der jeweiligen C-Führung begrenzenden Stegen anliegen.

In Weiterbildung der Erfindung weist das erste Rahmenprofil an wenigstens einer Längsseite, bevorzugt an beiden Längsseiten eine C-Führung auf, in die jeweils ein Schiebeelement eingebracht ist, das nachfolgend mit einem Endabschnitt in die C-Führung des zweiten Rahmenprofils eingeschoben wird. Hierdurch ist die Rotation des ersten Rahmenprofils blockiert, wodurch einem unbeabsichtigten Lösen entgegengewirkt ist.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschreiben. Es zeigen:
- Figur 1: die schematische räumliche Darstellung eines Verbindungselements mit zwei angeordneten Schiebeelementen;
- Figur 2: die schematische räumliche Darstellung eines Rahmenprofils;
- Figur 3: die Darstellung der Verfahrensschritte eines Verfahrens zur Befestigung eines ersten Rahmenprofils zwischen zwei gegenüberliegend angeordneten zweiten Rahmenprofilen eines Rahmens
a) Einsetzen des ersten Rahmenprofils;
b) Rotieren des ersten Rahmenprofils (Eindrehen der Hammerköpfe in die C-Führung der gegenüberliegenden zweiten Rahmenprofile);
c) Verschieben der Schiebelemente;
d) fertig montiertes erstes Rahmenprofil;
- Figur 4: die schematische räumliche Darstellung eines Verbindungselements mit zwei angeordneten Schiebeelementen in einer zweiten Ausführungsform;
- Figur 5: die Darstellung des Verbindungselements aus Figur 4 im Längsschnitt und
- Figur 6: die schematische räumliche Darstellung eines Verbindungselements mit einem angeordneten Schiebeelement in einer dritten Ausführungsform.

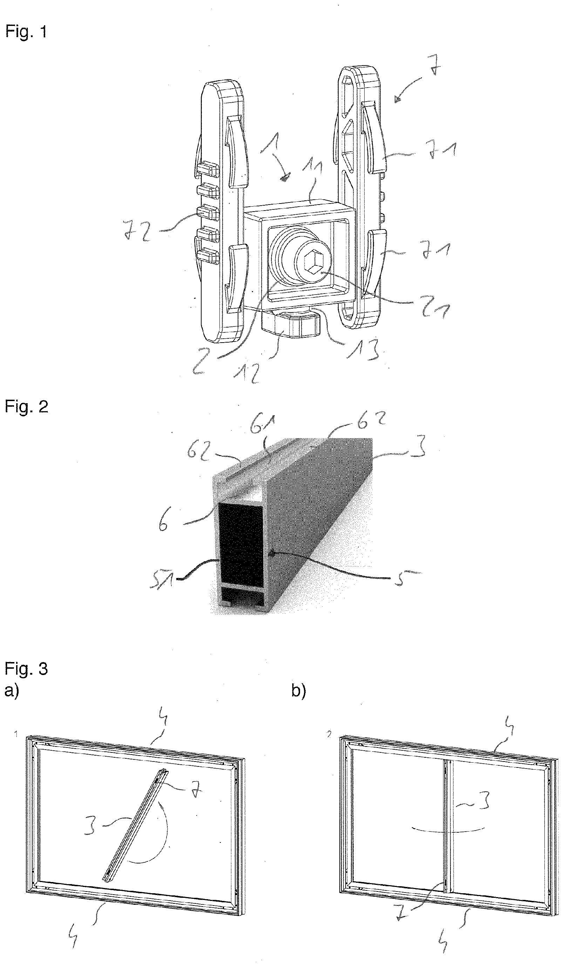

Das als Ausführungsbeispiel gewählte Verbindungselement 1 ist als Aluminiumgussteil hergestellt und umfasst ein quaderförmiges Schlittenstück 11, an dem ein Hammerkopf 12 angeordnet ist. Das Schlittenstück 11 ist im Ausführungsbeispiel becherartig ausgebildet und weist einen Hohlraum 14 auf, in dem ein Schraubenkopf 21 einer durch das Schlittenstück 11 geführten Schraube 2 angeordnet ist. Der Schraubenkopf 21 ist vorliegend als Innensechskant ausgeführt. Der Querschnitt des Schlittenstücks 11 entspricht im Wesentlichen dem Querschnitt der Kammer 51 des Kammerprofils 5 des ersten Rahmenprofils 3, das schematisch in Figur 2 dargestellt ist.

Der Hammerkopf 12 ist im Wesentlichen in Form eines Quaders mit abgerundeten Ecken ausgebildet und ist über einen Steg 13 mit dem Schlittenstück 11 verbunden. Der Querschnitt des Hammerkopfes 12 entspricht im Wesentlichen dem Querschnitt der C-Führung 6, in die er einsetzbar ist.

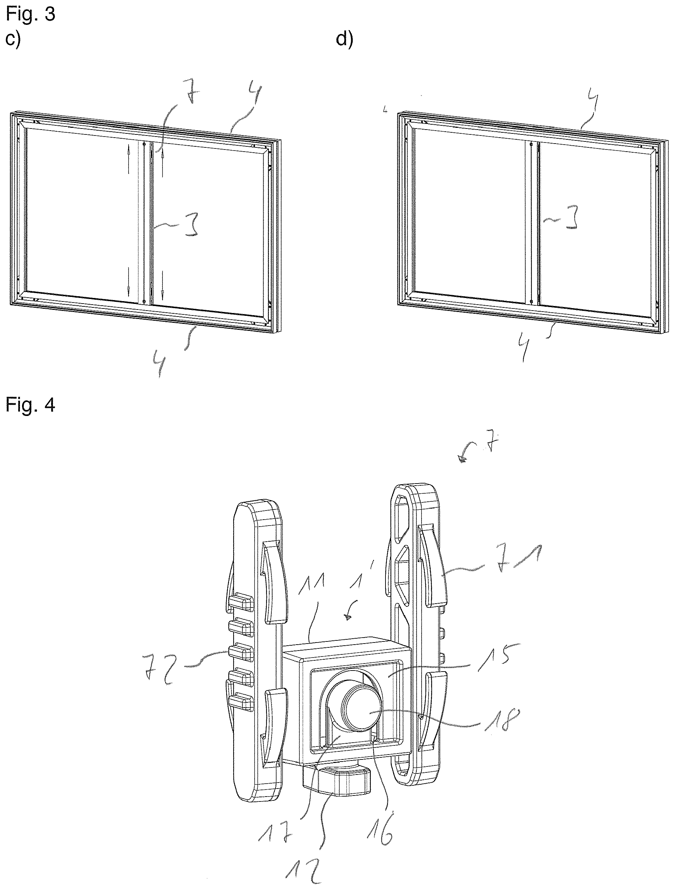

In Figur 3 ist ein Rahmen gezeigt, der zwei parallel angeordnete zweite Rahmenprofile 4 aufweist, zwischen denen ein erstes Rahmenprofil 3 eingesetzt ist. Die ersten und zweiten Rahmenprofile 3, 4 sind im Ausführungsbeispiel als identische Aluminiumprofile ausgebildet und weisen jeweils ein Kammerprofil 5 mit rechteckigem Querschnitt auf, an dessen gegenüberliegenden schmalen Seiten eine C-Führung 6 vorhanden ist (vgl. hierzu Figur 2). Die C-Führungen 6 weisen jeweils einen Längsschlitz 61 auf, der durch zwei Stege 62 begrenzt ist.

In das erste Rahmenprofil 3 ist an beiden Enden jeweils ein Schlittenstück 11 eines Verbindungselements 1 in das Kammerprofil 5 eingesetzt und über die Schraube 2 fixiert, wobei die Hammerköpfe 12 mit den Stegen 13 endseitig hervorragen. Zum Eingriff eines Schraubwerkzeugs in die Schraube ist fluchtend mit dieser in dem Kammerprofil seitlich eine - nicht dargestellte - Ausnehmung eingebracht. An beiden Enden des ersten Rahmenprofils 3 werden in die beiden gegenüberliegenden C-Führungen 6 Schiebeelemente 7 eingesetzt.

Die Schiebeelemente 7 sind im Wesentlichen quaderförmig mit abgerundeten Enden ausgebildet. An ihren Längsseiten sind jeweils zwei Federelemente vorhanden, die in Form einander entgegen gerichteter, elastischer Flügel 71 ausgebildet sind. An ihrer dem Längsschlitz 61 der C-Führung 6 zugewandten Seite weisen die Schiebeelemente 7 weiterhin eine Anordnung parallel zueinander angeordneter, elastischer Querrippen 72 auf. Durch die Flügel 71 und die Querrippen 72 sind die Schiebeelemente 7 spielfrei in den C-Führungen 6 gehalten.

Zur Verbindung des ersten Rahmenprofils 3 mit den beiden gegenüberliegend angeordneten zweiten Rahmenprofilen 4 des Rahmens wird das erste Rahmenprofil 3 mit den endseitigen Hammerköpfen 12 in die C-Führungen 6 der zweiten Rahmenprofile 4 eingesetzt. Die Breite der Hammerköpfe 12 ist etwas geringer als die Breite der Längsschlitze 61, durch die diese eingesetzt sind. Die Stege 3 durch den jeweiligen Längsschlitz der C-Führungen 61 hindurchgeführt.

Zur Befestigung des ersten Rahmenprofils 3 wird dieses nun um 90° seine Längsachse rotiert. Die Hammerköpfe 12 liegen in dieser Position an den durch die Längsschlitze 61 begrenzten Stegen 62 der C-Führungen 6 an. Zur Feststellung dieser Position werden die beidseitig der Hammerköpfe in den C-Führungen 6 des ersten Rahmenprofils 3 angeordneten Schiebeelemente 7 in die C-Führungen 6 der zweiten Rahmenprofile 4 geschoben. Eine unbeabsichtigte Rotation des ersten Rahmenprofils 3 ist hierdurch verhindert.

Im Ausführungsbeispiel gemäß Figur 4 ist in dem Schlittenstück 11' des Verbindungselements 1' eine Deckplatte 15 angeordnet, die den Hohlraum 14 abdeckt und die mit einem U-förmigen Schlitz 16 versehen ist, wodurch eine Federlasche 17 gebildet ist. Bündig zu dem kreisbogenförmigen Ende der Federlasche 17 ist auf dieser ein zylindrisch ausgebildetes Rastelement 18 zum rastenden Eingriff in eine in der Kammer 51 des Kammerprofils 5 des ersten Rahmenprofils 3 vorhandenen Öffnung angeordnet. Die Öffnung des Kammerprofils 5 ist hierzu vorzugsweise in Form einer Bohrung ausgebildet, deren Innendurchmesser nur geringfügig größer ist, als der Außendurchmesser des Rastelements 18. An seiner der Federlasche 17 gegenüberliegenden Deckseite ist das Schlittenstück 11' offen ausgebildet.

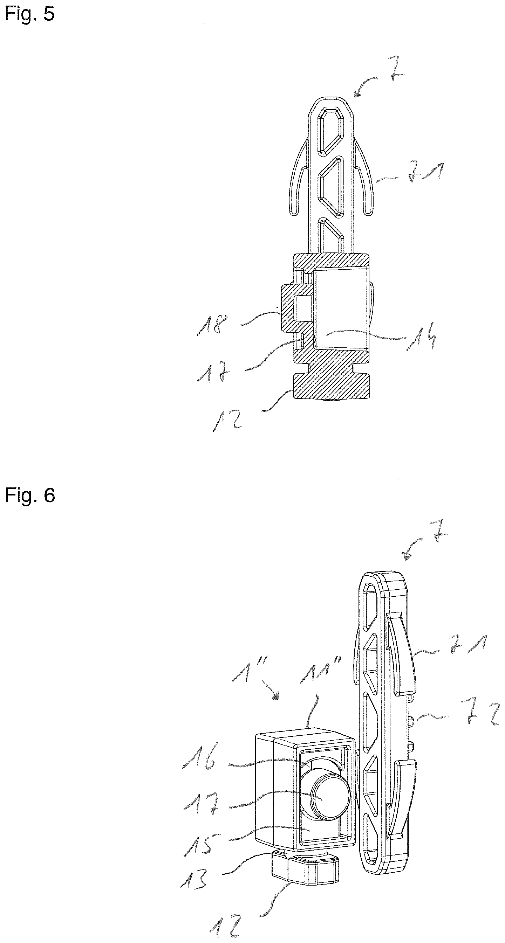

Im Ausführungsbeispiel gemäß Figur 6 ist das Schlittenstück 11" quaderförmig, jedoch wesentlich schmaler ausgebildet, wodurch es gegenüber den vorstehend beschriebenen Ausführungsbeispielen eine rechteckige und nicht quadratische Grundfläche aufweist. Die Höhe des Schlittenstücks 11" entspricht der Breite der Deckfläche des Schlittenstücks 11' des Ausführungsbeispiels gemäß Figur 4. Das Schlittenstück 11" kann in einer zu den vorstehenden Ausführungsbeispielen um 90° verdrehten Lage in die Kammer 51 des ersten Rahmenprofils 3 eingeschoben werden. In diesem Ausführungsbeispiel ist lediglich ein Schiebeelement 7 zur Rotationssicherung des ersten Rahmenprofils 3 nach Montage an einem zweiten Rahmenprofil 4 angeordnet.

## Patentansprüche

1. Verbindungselement zur Verbindung eines ersten, gekammerten Rahmenprofils (3) mit einem zweiten, eine C-Führung (6) aufweisenden Rahmenprofil (4), umfassend ein quaderförmiges Schlittenstück (11), das Mittel zur Fixierung in der Kammer (51) des gekammerten Rahmenprofils (3) aufweist und das an einer Seite ein Hammerkopfstück (12) zum Eindrehen in die C-Führung (6) des zweiten Rahmenprofils (4) aufweist.

2. Verbindungselement nach Anspruch 1, **dadurch gekennzeichnet, dass** die Mittel zur Fixierung des Schlittenstücks (11) eine Schraube (2) umfassen, die das Schlittenstück (11) durchdringend in dieses eingeschraubt ist und/oder wenigstens ein elastisches und/oder federndes Spannelement aufweist, das durch Einbringen des Schlittenstücks (11) in die Kammer (51) komprimierbar ist.

3. Profilverbindung, umfassend ein erstes, gekammertes Rahmenprofil (3) und ein zweites, eine C-Führung (6) aufweisendes Rahmenprofil (4), wobei in die Kammer (51) des ersten Rahmenprofils (3) an wenigstens einem Ende das Schlittenstück (11) eines Verbindungselements (1) nach einem der Ansprüche 1 und 2 eingebracht und fixiert ist, wobei das Hammerkopfstück (12) in die C-Führung (6) des zweiten Rahmenprofils (4) eingedreht ist, sodass der Hammerkopf (12) die den Längsschlitze (61) der C-Führung (6) begrenzenden Stege (62) hintergreift.

4. Profilverbindung nach Anspruch 3, **dadurch gekennzeichnet, dass** das Schlittenstück (11) eine dieses durchdringende Schraube (2) aufweist, wobei das erste, gekammerte Rahmenprofil (3) mit einer seitlichen Öffnung versehen ist, durch welche die Schraube (2) festziehbar ist.

5. Profilverbindung nach Anspruch 3, **dadurch gekennzeichnet, dass** das erste, gekammerte Rahmenprofil (3) an wenigstens einem Ende mit einer seitlichen Öffnung versehen ist und das Schlittenstück (11) ein federnd an dem Schlittenelement (11) angeordnetes Rastelement aufweist, das durch die Öffnung hindurchragt, gegen die das Rastelement vorgespannt ist.

6. Profilverbindung nach Anspruch 5, **dadurch gekennzeichnet, dass** das Rastelement über einen federnden Steg mit dem Schlittenstück (11) verbunden ist.

7. Profilverbindung nach einem der Ansprüche 3 bis 6, **dadurch gekennzeichnet, dass** das erste, gekammerte Rahmenprofil (3) an wenigstens einer Längsseite, bevorzugt an beiden Längsseiten eine C-Führung (6) aufweist, in die jeweils ein Schiebeelement (7) eingebracht ist, das mit einem Endabschnitt in die C-Führung (6) des zweiten Rahmenprofils (4) einschiebbar ist.

8. Profilverbindung nach Anspruch 7, **dadurch gekennzeichnet, dass** das wenigstens eine Schiebeelement (7) einen im Wesentlichen rechtförmigen Querschnitt aufweist, an dessen Längsseiten wenigstens ein Federelement angeordnet ist.

9. Profilverbindung nach Anspruch 8, **dadurch gekennzeichnet, dass** das wenigstens eine Federelement durch wenigstens einen elastischen, nach außen ausgestellten Flügel (71) gebildet ist.

10. Profilverbindung nach Anspruch 8 oder 9, **dadurch gekennzeichnet, dass** das wenigstens eine Schiebeelement (7) an seiner dem Längsschlitz (61) der dieses aufnehmenden C-Führung (6) zugewandten Deckseite wenigstens eine vorzugsweise elastisch ausgebildete Querrippe (72) aufweist.

11. Profilverbindung nach einem der Ansprüche 3 bis 10, **dadurch gekennzeichnet, dass** das zweite Rahmenprofil (4) identisch zu dem ersten Rahmenprofil (3) ausgebildet ist.

12. Verfahren zur Befestigung eines ersten, gekammerten Rahmenprofils (3) zwischen zwei gegenüberliegend angeordneten zweiten, jeweils eine C-Führung (6) aufweisenden Rahmenprofilen (4) eines Rahmens, wobei zunächst in die Kammer (51) des ersten Rahmenprofils (3) an seinen beiden Endseiten jeweils ein Verbindungselement (1) nach einem der Ansprüche 1 oder 2 derart eingebracht und fixiert wird, dass die Hammerköpfe (12) der beiden Verbindungselemente (1) gleich ausgerichtet sind, nachfolgend das erste Rahmenprofil (3) derart zwischen den beiden zweiten Rahmenprofilen (4) eingeschwenkt wird, dass die gegenüberliegend angeordneten Hammerköpfe (12) in die C-Führungen (6) der zweiten Rahmenprofile (4) eingreifen und anschließend das erste Rahmenprofil (3) um seine Längsachse rotiert wird, bis die Hammerköpfe (12) hinter den beiden den Längsschlitz (61) der jeweiligen C-Führung (6) begrenzenden Stegen (62) anliegen.

13. Verfahren nach Anspruch 112, **dadurch gekennzeichnet, dass** das erste Rahmenprofil (3) an wenigstens einer Längsseite, bevorzugt an beiden Längsseiten eine C-Führung (6) aufweist, in die jeweils ein Schiebeelement (7) eingebracht ist, das nachfolgend mit einem Endabschnitt in die C-Führung (6) des zweiten Rahmenprofils (4) eingeschoben wird.
